# EUROPÄISCHE PATENTSCHRIFT

(11) **EP 1 377 358 B1**
(45) Veröffentlichungstag und Bekanntmachung des Hinweises auf die Patenterteilung: **21.06.2006**
(21) Anmeldenummer: 02761851.1
(22) Anmeldetag: 05.03.2002
(51) Int. Cl.: B01D 53/18, B01D 47/06, B01D 47/12, B01D 53/78

(54) **WÄSCHER UND VERFAHREN ZUM REINIGEN VON GASEN**
WASHER AND METHOD FOR PURIFYING GASES
LAVEUR ET PROCEDE DE PURIFICATION DE GAZ

(30) Priorität: 10.04.2001 DE 10118961
(43) Veröffentlichungstag der Anmeldung: 07.01.2004
(73) Patentinhaber: THERMOSELECT AKTIENGESELLSCHAFT, FL-9490 Vaduz (LI)
(72) Erfinder: KISS, Günter, H., CH-6648 Minusio (CH)
(74) Vertreter: Pfenning, Meinig & Partner GbR
(86) Internationale Anmeldenummer: PCT/EP2002/002394
(87) Internationale Veröffentlichungsnummer: WO 2002/083271

(56) Entgegenhaltungen:
- WO-A-98/01214
- US-A- 4 200 616
- US-A- 5 648 048
- DATABASE WPI Section Ch, Week 199230 Derwent Publications Ltd., London, GB; Class J01, AN 1992-248021 XP002204806 & SU 1 674 931 A (GAS PROC RES DES INST), 7. September 1991 (1991-09-07)
- PATENT ABSTRACTS OF JAPAN vol. 1998, no. 10, 31. August 1998 (1998-08-31) & JP 10 113534 A (MITSUBISHI HEAVY IND LTD), 6. Mai 1998 (1998-05-06)

## Beschreibung

Die Erfindung betrifft einen Wäscher sowie ein Verfahren zum Reinigen von Gasen nach dem Oberbegriff des Anspruchs 1 bzw. 11.

Herkömmliche Wäscher zum Reinigen von mit partikel- und/oder gasförmigen Verunreinigungen belasteten Gasen enthalten normalerweise sogenannte Absorptionskolonnen aus Füll- oder Kontaktkörpern, die mit einer Waschflüssigkeit berieselt werden. In diesen Absorptionskolonnen wird ein inniger Kontakt zwischen der Waschflüssigkeit und den Gasen hergestellt, der zu einer Absorption von gasförmigen Verunreinigungen mit hohem Wirkungsgrad führt. Die Waschflüssigkeit kann aus Wasser bestehen, so daß nur eine Absorption stattfindet; sie kann jedoch auch Reaktionsmittel enthalten, durch die gasförmige Verunreinigungen, beispielsweise Schwefelwasserstoff, Schwefeldioxid, Stickoxide oder Ammoniak in umweltverträgliche Substanzen umgewandelt werden. Diese Absorptionskolonnen sind in der Regel mit geordneten oder ungeordneten Packungen ausgestattet, die in einzelnen Sektionen auf Auflagerosten aufgebaut sind. Um eine gleichmäßige Berieselung sicherzustellen, befinden sich am Kopf dieser Kolonnen Flüssigkeitsverteiler, welche sowohl als Schwerkraftverteiler als auch als Düsenverteiler ausgeführt sein können.

Der Nachteil derartiger Kolonnen sind relativ große Packungshöhen und die hieraus resultierenden großen - Druckverluste. Sind im Gasstrom Staubpartikel vorhanden, sind diese Kolonnen nur mit hohen Wartungskosten betreibbar, weil sonst schon nach kurzer Betriebszeit die Packungen verstopft sind und der Druckverlust zu groß wird.

Grundsätzlich ist die Reinigung eines Gases ohne einen gasseitigen Druckverlust nicht realisierbar, denn die erforderlichen hohen Stoffaustauschkoeffizienten werden nur bei hohen Relativgeschwindigkeiten zwischen dem Gas und der Waschflüssigkeit erhalten. Bei Flüssigkeitsstrahlpumpen tritt jedoch kein Druckverlust auf und man erzielt auch gute Stoffaustauschkoeffizienten. Dennoch sind sie zur Gasreinigung nicht geeignet, da die Verweilzeit des Gases in der Waschflüssigkeit zu kurz ist, um eine ausreichend hohe Absorption zu ermöglichen. Eine Verlängerung der Strahlpumpe bringt keine Verbesserung, da es dann zur Bildung von großen Flüssigkeitstropfen kommt und gleichzeitig die Relativgeschwindigkeit zwischen Gas und Flüssigkeit sinkt. Beide Effekte wirken sich nachteilig auf die Absorption aus.

Es ist daher die Aufgabe der vorliegenden Erfindung, einen Wäscher bzw. ein Verfahren zum Reinigen von Gasen, die partikelförmige und/oder gasförmige Verunreinigungen enthalten, bei welchen die Gase durch mindestens eine mit Waschflüssigkeit besprühte Absorptionskolonne geleitet werden, anzugeben, mit denen es möglich ist, Gase mit hohem Staubanteil und ohne Druckverlust im Gasstrom unter Erzielung eines hohen Wirkungsgrades zu reinigen.

Diese Aufgabe wird erfindungsgemäß gelöst durch einen Wäscher mit den Merkmalen des Anspruchs 1 bzw. durch ein Verfahren mit den Merkmalen des Anspruchs 11. Vorteilhafte Weiterbildungen des erfindungsgemäßen Wäschers bzw. des erfindungsgemäßen Verfahrens ergeben sich aus den jeweils zugeordneten Unteransprüchen.

Dadurch, daß zusätzlich eine mit der Waschflüssigkeit betriebene Strahlpumpe vorgesehen ist, welche im Gasstrom in Reihe mit der Absorptionskolonne angeordnet ist und einen Unterdruck im Gasstrom erzeugt, werden die Vorteile der herkömmlichen Absorptionskolonne und der Flüssigkeitsstrahlpumpe bei der Gasreinigung miteinander verknüpft. Die Absorptionswirkungen der Strahlpumpe und der Absorptionskolonne addieren sich während der in der Strahlpumpe erzeugte Unterdruck den Druckverlust in der Absorptionskolonne kompensieren oder sogar insgesamt noch für einen Druckgewinn sorgen kann.

Vorteilhaft ist die Strahlpumpe im Gasstrom vor der Absorptionskolonne angeordnet, so daß die Staubpartikel durch die Strahlpumpe zum großen Teil aus dem Gasstrom entfernt werden und der Absorptionskolonne ein weitgehend staubfreies Gas zugeführt wird.

Vorzugsweise enthält der Wäscher ein Leitrohr für das aus der Strahlpumpe austretende Gemisch aus den Gasen und der Waschflüssigkeit, welches konzentrisch von der Absorptionskolonne umgeben ist, wobei das Leitrohr zweckmäßig einen Doppelmantel aus zwei konzentrischen Zylindern aufweist, zwischen denen die Waschflüssigkeit der Strahlpumpe zuführbar ist, und weiterhin das Leitrohr mit mindestens einem seitlichen Auslaß für die Zuführung der Waschflüssigkeit zu zumindest einer Sprühdüse der Absorptionskolonne versehen ist. Weiterhin ist es von Vorteil, wenn der Gasstrom an dem der Strahlpumpe entgegengesetzten Ende des Leitrohres um etwa 180° umlenkbar ist und sich unterhalb dieses Endes ein Sammelraum für die aus dem Leitrohr sowie aus der Absorptionskolonne austretende, mit den Verunreinigungen belastete Waschflüssigkeit befindet. Insgesamt erhält man hierdurch einen sehr kompakten und einfach aufgebauten Wäscher, der sich durch geringen Platzbedarf und niedrige Investitionskosten auszeichnet.

Durch die Strahlpumpe kann ein Unterdruck im Bereich von 20 - 40 mbar erzeugt werden, während der Druckverlust in der Absorptionskolonne auf unter 20 mbar gehalten werden kann. Durch Änderung der Menge der durch die Strahlpumpe geführten Waschflüssigkeit kann der im Gasstrom erzeugte Unterdruck auf einen gewünschten Wert eingestellt werden. Für eine wirksame Reinigung sollte das Mengenverhältnis der durch die Strahlpumpe geführten Waschflüssigkeit zu der durch die Absorptionskolonne geführten Waschflüssigkeit etwas 2:1 betragen.

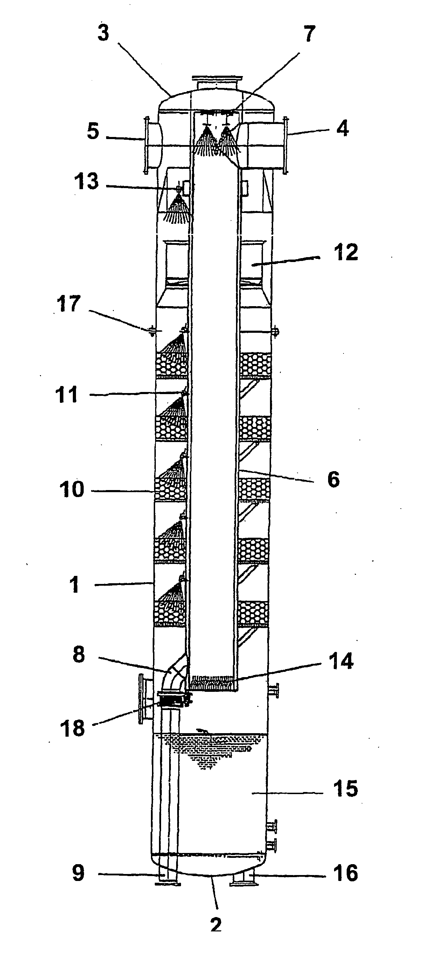

Die Erfindung wird im Folgenden anhand eines in der Figur dargestellten Ausführungsbeispiels näher erläutert. Diese zeigt die Darstellung eines senkrechten Schnitte durch einen Wäscher.

Der Wäscher weist ein zylindrisches Gehäuse 1 auf, das an den Stirnseiten durch einen Boden 2 sowie einen Deckel 3 verschlossen ist. Am oberen Ende des Gehäuses 1 befinden sich einander gegenüberliegend ein Gaseinlaß 4 und ein Gasauslaß 5. Der Gaseinlaß 4 ist durch die Wand des Gehäuses 1 hindurch bis in ein sich in Längsrichtung des Gehäuses 1 erstreckendes Leitrohr 6 hineingeführt. Der Gasauslaß 5 hingegen beginnt in der Wand des Gehäuses 1.

Das Leitrohr 6 besteht aus zwei zueinander sowie zum Gehäuse 1 konzentrischen Zylindern, die einen Doppelmantel mit einem Hohlraum zwischen sich bilden. Das Leitrohr 6 ist am oberen Ende geschlossen und am unteren Ende offen. Der Hohlraum zwischen den beiden Zylindern des Leitrohres 6 ist am unteren Ende geschlossen und mündet am oberen Ende in die Düsen einer Flüssigkeitsstrahlpumpe 7.

Der Hohlraum des Doppelmantels des Leitrohres 6 ist am unteren Ende über einen Stutzen 8 mit einer Zuführungsleitung 9 für Waschflüssigkeit verbunden. Die unter einem Druck von etwa 3 - 4 bar stehende Waschflüssigkeit steigt in dem Doppelmantel nach oben und tritt aus den Düsen der Flüssigkeitsstrahlpumpe 7 aus. Diese Düsen sind in einer solchen Anzahl und Anordnung vorgesehen, daß über den Querschnitt des Leitrohres 6 eine möglichst gleichförmige Besprühung erfolgt.

Das Leitrohr 6 ist von mehreren ringförmigen, sich jeweils über den Abstand zwischen dem Doppelmantel und der Wand des Gehäuses 1 erstreckenden Füllkörperkörben 10 konzentrisch umgeben. Die Füllkörperkörbe 10 sind in gleichen gegenseitigen Abständen angeordnet und bilden eine Absorberkolonne. Über jedem Füllkörperkorb befinden sich vorzugsweise mehrere in Umfangsrichtung verteilte Sprühdüsen 11, durch welche eine gleichmäßige Berieselung der gesamten Oberfläche des jeweiligen Füllkörperkorbes 10 erfolgt. Die Sprühdüsen 11 sind mit dem Hohlraum des Doppelmantels des Leitrohres 6 verbunden, so daß die Füllkörper mit der Waschflüssigkeit besprüht werden.

Oberhalb der Absorptionskolonne befindet sich ein Tropfenabscheider 12 und über diesem eine weitere Sprühdüsenanordnung 13. Diese sprüht Wasser auf den Tropfenabscheider 12, um diesen in den erforderlichen Zeitabständen zu reinigen.

Im Betrieb des Wäschers tritt das zu reinigende Gas über den Gaseinlaß 4 in das Leitrohr 6 an dessen oberem Ende ein. Die aus den Düsen der Flüssigkeitsstrahlpumpe 7 unter einem Druck von 3 - 4 bar austretende Waschflüssigkeit erzeugt einen Unterdruck von etwa 20 - 40 mbar im Leitrohr 6, durch den das Gas angesaugt wird und sich mit der Waschflüssigkeit vermischt. Die Größe des Unterdrucks ist über die Menge der pro Zeiteinheit aus der Flüssigkeitsstrahlpumpe 7 austretenden Waschflüssigkeit innerhalb bestimmter Grenzen einstellbar. Das Gas/Waschflüssigkeits-Gemisch bewegt sich im Leitrohr 6 nach unten, wobei die Waschflüssigkeit bereits einen Teil der gasförmigen Verunreinigungen absorbiert und gegebenenfalls umwandelt, so daß sich ein chemisches Gleichgewicht einstellt. Das Gemisch tritt dann nach dem Passieren von die Entstaubung begünstigenden Prallblechen 14 am unteren Ende des Leitrohres 6 aus und entmischt sich wieder, indem die Waschflüssigkeit mit den absorbierten Verunreinigungen und dem größten Teil des Staubes sich in einem im Gehäuse 1 unterhalb des Leitrohres 6 befindlichen Sammelraum 15 absetzt und das Gas mit den noch nicht absorbierten Verunreinigungen und dem Reststaub um 180° umgelenkt wird und nun zwischen dem Doppelmantel des Leitrohres 6 und der Wand des Gehäuses 1 nach oben steigt, wobei es durch die Füllkörperkörbe 10 der Absorptionskolonne strömt.

In den Füllkörperkörben 10 wird das Gas erneut mit frischer, aus den Sprühdüsen 11 ausgetretener Waschflüssigkeit 11 in innigen Kontakt gebracht, so daß auch die verbliebenen gasförmigen Verunreinigungen absorbiert und der Reststaub durch Schwerkraft abgeschieden werden, welche mit der Waschflüssigkeit in den Sammelraum 15 gelangen. Im Tropfenabscheider 12 werden etwaige im Gas mitgeführte Tropfen der Waschflüssigkeit entfernt und das gereinigte Gas wird dann über den Gasauslaß 5 abgeführt.

Der Druckverlust des Gases beim Durchströmen der Füllkörperkörbe 10 kann auf deutlich unter 20 mbar gehalten werden, so daß er geringer als der von der Flüssigkeitsstrahlpumpe 7 erzeugte Unterdruck ist. Dadurch ist der Wäscher tatsächlich in der Lage, das zu reinigende Gas anzusaugen.

Der Sammelraum 15 ist mit einer Füllstandsüberwachung versehen, so daß, wenn sich eine vorgegebene Menge Waschflüssigkeit gesammelt hat, diese über eine Leitung 16 entleert werden kann. Durch nachfolgende Aufbereitung kann sie dann wieder als frische Waschflüssigkeit über die Leitung 6 zugeführt werden.

Die Herstellungskosten für den Wäscher sind gering, da alle flüssigkeitsführenden Rohrleitungen außerhalb des Gehäuses 1 entfallen. Dadurch kann die Absorptionskolonne ohne zusätzlichen Stahlbau montiert werden. Rohrleitungskräfte werden gleichmäßig auf den Deckel 3 verteilt. Materialverstärkungen der Gehäusewand, um etwaige Halterungskräfte aufzufangen; können entfallen. Ebenso sind keine aufwendigen Konstruktionen zur Aufhängung der Sprühdüse 11 erforderlich, da diese direkt auf das Leitrohr 6 aufgesetzt sind.

Auch Wartungsarbeiten können äußerst effizient durchgeführt werden. Hierzu wird der Gehäuseflansch 17 am Kopf der Absorptionskolonne geöffnet, die Verbindung 18 zwischen dem Stutzen 8 und dem Zuführungsrohr 9 gelöst und dann das gesamte Innenteils mittels einer geeigneten Hebelvorrichtung nach oben aus dem Gehäuse 1 gezogen.

## Patentansprüche

1. Wäscher zum Reinigen von Gasen, die partikelförmige und/oder gasförmige Verunreinigungen enthalten, in welchem die Gase durch mindestens eine mit Waschflüssigkeit besprühte Absorptionskolonne (10) geleitet werden,
**dadurch gekennzeichnet,**
**daß** zusätzlich eine mit der Waschflüssigkeit betriebene Strahlpumpe (7) vorgesehen ist, welche im Gasstrom in Reihe mit der Absorptionskolonne (10) angeordnet ist und einen Unterdruck im Gasstrom erzeugt.

2. Wäscher nach Anspruch 1, **dadurch gekennzeichnet, daß** die Strahlpumpe (7) im Gasstrom vor der Absorptionskolonne (10) angeordnet ist.

3. Wäscher nach Anspruch 1 oder 2, **dadurch gekennzeichnet, daß** die Gase und die Waschflüssigkeit am Ausgang der Strahlpumpe (7) im Gleichstrom und in der Absorptionskolonne (10) im Gegenstrom geführt sind.

4. Wäscher nach einem der Ansprüche 1 bis 3, **dadurch gekennzeichnet, daß** er ein Leitrohr (6) für das aus der Strahlpumpe (7) austretende Gemisch aus den Gasen und der Waschflüssigkeit aufweist, welches konzentrisch von der Absorptionskolonne (10) umgeben ist.

5. Wäscher nach Anspruch 4, **dadurch gekennzeichnet, daß** das Leitrohr (6) einen Doppelmantel aus zwei konzentrischen Zylindern aufweist, zwischen denen die Waschflüssigkeit der Strahlpumpe (7) zuführbar ist, und daß das Leitrohr (6) mit mindestens einem seitlichen Auslaß für die Zuführung der Waschflüssigkeit zu zumindest einer Sprühdüse (11) der Absorptionskolonne (10) versehen ist.

6. Wäscher nach Anspruch 4 oder 5, **dadurch gekennzeichnet, daß** sich der Gaseinlaß (4) und der Gasauslaß (5) am gleichen Ende des Leitrohres (6) befinden.

7. Wäscher nach einem der Ansprüche 4 bis 6, **dadurch gekennzeichnet, daß** der Gasstrom am der Strahlpumpe (7) entgegengesetzten Ende des Leitrohres (6) um etwa 180° umlenkbar ist.

8. Wäscher nach einem der Ansprüche 4 bis 7, **dadurch gekennzeichnet, daß** sich unterhalb des der Strahlpumpe (7) entgegengesetzten Endes des Leitrohres (6) ein Sammelraum (15) für die mit den Verunreinigungen belastete Waschflüssigkeit befindet.

9. Wäscher nach einem der Ansprüche 4 bis 8, **dadurch gekennzeichnet, daß** im Leitrohr (6) an dessen der Strahlpumpe (7) entgegengesetzten Ende Prallbleche (14) zur Erhöhung der Staubabscheidung vorgesehen sind.

10. Wäscher nach einem der Ansprüche 1 bis 9, **dadurch gekennzeichnet, daß** die Absorptionskolonne aus mehreren im Gasstrom hintereinander liegenden Füllkörperkörben (10) besteht.

11. Verfahren zum Reinigen von Gasen, die partikelförmige und/oder gasförmige Verunreinigungen enthalten, welche mittels einer Waschflüssigkeit durch Absorption aus den Gasen entfernt werden,
**dadurch gekennzeichnet, daß** die Gase aufeinander folgend durch eine mit der Waschflüssigkeit betriebene Strahlpumpe (7) und durch eine mit der Waschflüssigkeit berieselte Füllkörper-Absorptionskolonne (10) geleitet werden.

12. Verfahren nach Anspruch 11, **dadurch gekennzeichnet, daß** die Strahlpumpe (7) einen Unterdruck im Gasstrom erzeugt, der den Druckverlust in der Absorptionskolonne (10) zumindest kompensiert.

13. Verfahren nach Anspruch 11 oder 12, **dadurch gekennzeichnet, daß** die Strahlpumpe (7) einen Unterdruck im Bereich von 20 - 40 mbar erzeugt.

14. Verfahren nach einem der Ansprüche 11 bis 13, **dadurch gekennzeichnet, daß** der Druckverlust in der Absorptionskolonne (10) geringer als 20 mbar ist.

15. Verfahren nach einem der Ansprüche 11 bis 14, **dadurch gekennzeichnet, daß** die Strahlpumpe (7) mit einem Druck der Waschflüssigkeit von etwa 4 - 5 mbar betrieben wird.

16. Verfahren nach einem der Ansprüche 11 bis 15, **dadurch gekennzeichnet, daß** die Menge der durch die Strahlpumpe (7) geführten Waschflüssigkeit entsprechend dem gewünschten Unterdruck im Gasstrom eingestellt wird.

17. Verfahren nach einem der Ansprüche 11 bis 16, **dadurch gekennzeichnet, daß** das Mengenverhältnis der durch die Strahlpumpe (7) geführten Waschflüssigkeit zu der durch die Absorptionskolonne (10) geführten Waschflüssigkeit etwa 2:1 ist.

## Claims

1. Scrubber for purifying gases which contain particulate and/or gaseous impurities in which scrubber the gases are passed through at least one absorption column (10) sprayed with scrubbing liquid,
**characterized in that** in addition, a jet pump (7) operated by the scrubbing liquid is provided, which jet pump is arranged in the gas stream in series with the absorption column (10) and generates a reduced pressure in the gas stream.

2. Scrubber according to Claim 1, **characterized in that** the jet pump (7) is arranged in the gas stream upstream of the absorption column (10).

3. Scrubber according to Claim 1 or 2, **characterized in that** the gases and the scrubbing liquid are conducted in cocurrent flow at the outlet of the jet pump (7) and in countercurrent flow in the absorption column (10).

4. Scrubber according to one of Claims 1 to 3, **characterized in that** it has a guide tube (6) for the mixture of the gases and the scrubbing liquid exiting from the jet pump (7), which guide tube is concentrically surrounded by the absorption column (10).

5. Scrubber according to Claim 4, **characterized in that** the guide tube (6) has a double shell of two concentric cylinders between which the scrubbing liquid can be fed to the jet pump (7) and **in that** the guide tube (6) is provided with at least one lateral outlet for feeding the scrubbing liquid to at least one spray nozzle (11) of the absorption column (10).

6. Scrubber according to Claim 4 or 5, **characterized in that** the gas inlet (4) and the gas outlet (5) are situated at the same end of the guide tube (6).

7. Scrubber according to one of Claims 4 to 6, **characterized in that** the gas stream can be turned through about 1.80° at the end of the guide tube (6) opposite the jet pump (7).

8. Scrubber according to one of Claims 4 to 7, **characterized in that** a collecting space (15) for the scrubbing liquid contaminated with the impurities is situated below the end of the guide tube (6) opposite the jet pump (7).

9. Scrubber according to one of Claims 4 to 8, **characterized in that** baffle plates (14) for increasing the dust precipitation are provided in the guide tube (6) at its end opposite the jet pump (7).

10. Scrubber according to one of Claims 1 to 9, **characterized in that** the absorption column consists of a plurality of packing baskets- (10) lying one after the other in the gas stream.

11. Method for purifying gases which contain particulate and/or gaseous impurities which are removed from the gases by absorption using a scrubbing liquid, **characterized in that** the gases are passed sequentially through a jet pump (7) operated by the scrubbing liquid and through a packed absorption column (10) which is irrigated by the scrubbing liquid.

12. Method according to Claim 11, **characterized in that** the jet pump (7) generates a reduced pressure in the gas stream which at least compensates for the pressure drop in the absorption column (10).

13. Method according to Claim 11 or 12, **characterized in that** the jet pump (7) generates a reduced pressure in the range of 20 - 40 mbar.

14. Method according to one of Claims 11 to 13, **characterized in that** the pressure drop in the absorption column (10) is less than 20 mbar.

15. Method according to one of Claims 11 to 14, **characterized in that** the jet pump (7) is operated at a scrubbing liquid pressure of about 4 - 5 mbar.

16. Method according to one of Claims 11 to 15, **characterized in that** the amount of the scrubbing liquid conducted through the jet pump (7) is set in accordance with the desired reduced pressure in the gas stream.

17. Method according to one of Claims 11 to 16, **characterized in that** the quantitative ratio of the scrubbing liquid conducted through the jet pump (7) to the scrubbing liquid conducted through the absorption column (10) is approximately 2:1.

## Revendications

1. Laveur destiné à purifier des gaz contenant des impuretés sous forme de particules et/ou de gaz, dans lequel les gaz sont acheminés à travers au moins une colonne d'absorption (10) aspergée de liquide de lavage,
**caractérisé en ce qu'**il est prévu en plus une pompe d'injection (7) entraînée par le liquide de lavage, laquelle pompe est disposée dans le courant de gaz en étant alignée sur la colonne d'absorption (10) et génère une dépression dans le courant de gaz.

2. Laveur selon la revendication 1, **caractérisé en ce que** la pompe d'injection (7) est disposée dans le courant de gaz devant la colonne d'absorption (10).

3. Laveur selon la revendication 1 ou 2, **caractérisé en ce que** les gaz et le liquide de lavage sont guidés en courant continu à la sortie de la pompe d'injection (7) et en contre-courant dans la colonne d'absorption (10).

4. Laveur selon l'une quelconque des revendications 1 à 3, **caractérisé en ce qu'**il comprend un tuyau d'acheminement (6) pour le mélange de gaz et de liquide de lavage sortant de la pompe d'injection (7), lequel tube est entouré de façon concentrique par la colonne d'absorption (10).

5. Laveur selon la revendication 4, **caractérisé en ce que** le tuyau d'acheminement (6) comprend un revêtement double composé de deux cylindres concentriques, entre lesquels le liquide de lavage peut être amené à la pompe d'injection (7), et **en ce que** le tuyau d'acheminement (6) est pourvu d'au moins un orifice d'évacuation latéral destiné à amener le liquide de lavage à au moins une buse de pulvérisation (11) de la colonne d'absorption (10).

6. Laveur selon la revendication 4 ou 5, **caractérisé en ce que** l'orifice d'admission des gaz (4) et l'orifice d'évacuation des gaz (5) se situent sur la même extrémité du tuyau d'acheminement (6).

7. Laveur selon l'une quelconque des revendications 4 à 6, **caractérisé en ce que** le courant de gaz peut être dévié d'approximativement 180° sur l'extrémité du tuyau d'acheminement (6) opposée à la pompe d'injection (7).

8. Laveur selon l'une quelconque des revendications 4 à 7, **caractérisé en ce qu'**une chambre collectrice (15) pour le liquide de lavage chargé en impuretés se situe au-dessous de l'extrémité du tuyau d'acheminement (6) opposée à la pompe d'injection (7).

9. Laveur selon l'une quelconque des revendications 4 à 8, **caractérisé en ce que** des chicanes (14) destinées à augmenter la séparation des poussières sont prévues dans le tuyau d'acheminement (6) sur son extrémité opposée à la pompe d'injection (7).

10. Laveur selon l'une quelconque des revendications 1 à 9, **caractérisé en ce que** la colonne d'absorption est constituée de plusieurs corbeilles à corps solide (10) situées les unes derrière les autres dans le courant de gaz.

11. Procédé de purification de gaz contenant des impuretés sous forme de particules et/ou de gaz, lesquelles sont retirées des gaz par absorption au moyen d'un liquide de lavage, **caractérisé en ce que** les gaz sont acheminés successivement par une pompe d'injection (7) entraînée par le liquide de lavage et par une colonne d'absorption des corps solides (10) aspergée du liquide de lavage.

12. Procédé selon la revendication 11, **caractérisé en ce que** la pompe d'injection (7) génère une dépression dans le courant de gaz, qui compense au moins la perte de pression dans la colonne d'absorption (10).

13. Procédé selon la revendication 11 ou 12, **caractérisé en ce que** la pompe d'injection (7) génère une dépression dans la plage de 20 à 40 mbar.

14. Procédé selon l'une quelconque des revendications 11 à 13, **caractérisé en ce que** la perte de pression dans la colonne d'absorption (10) est inférieure à 20 mbar.

15. Procédé selon l'une quelconque des revendications 11 à 14, **caractérisé en ce que** la pompe d'injection (7) est entraînée à une pression du liquide de lavage d'approximativement 4 à 5 mbar.

16. Procédé selon l'une quelconque des revendications 11 à 15, **caractérisé en ce que** la quantité de liquide de lavage guidée par la pompe d'injection (7) est réglée en fonction de la dépression souhaitée dans le courant de gaz.

17. Procédé selon l'une quelconque des revendications 11 à 16, **caractérisé en ce que** le rapport de quantité du liquide de lavage guidé par la pompe d'injection (7) sur le liquide de lavage guidé à travers la colonne d'absorption (10) est approximativement de 2:1.
